# EUROPEAN PATENT SPECIFICATION

(11) **EP 2 025 139 B1**
(45) Date of publication and mention of the grant of the patent: **12.05.2010**
(21) Application number: 08718615.1
(22) Date of filing: 06.03.2008
(51) Int. Cl.: H04M 1/725

(54) **MULTI-MEDIA MESSAGING SYSTEM FOR MOBILE TELEPHONE**
MULTIMEDIA-NACHRICHTENANORDNUNG FÜR MOBILE TELEFONE
SYSTÈME DE MESSAGERIE MULTIMÉDIA DESTINÉ A UN TÉLÉPHONE MOBILE

(30) Priority: 07.03.2007 GB 0704402
(43) Date of publication of application: 18.02.2009
(73) Proprietor: Communigate Limited, Southampton SO15 2EW (GB)
(72) Inventor: HAYTON, Paul, Michael, Fritwell Oxfordshire OX27 7QR (GB); JONES, Philip, Stephen, Halesworth Suffolk IP19 0HR (GB)
(74) Representative: Nicholls, Michael John
(86) International application number: PCT/GB2008/000754
(87) International publication number: WO 2008/107675

(56) References cited:
- GB-A- 2 348 082
- US-A1- 2003 125 055
- US-A1- 2006 195 506

## Description

The present invention relates to a system for sending formatted pages combining pictures, text, hyperlinks and other web style content between mobile telephones within a network or community of users. In particular this invention relates to a system and method for manipulating the content so it can be displayed on the destination mobile telephone accurately irrespective of screen size and format.

Current mobile telephones have the capability of sending Multimedia messages to other mobile telephones via the Multimedia Messaging System (MMS), sometimes referred to as "picture messaging". Such messages are addressed and routed by means of the mobile telephone numbers of the users. Many current mobile telephones also have the ability to browse the internet using on-board browsers that conform either to the WAP (Wireless Application Protocol) or other standards.

Each of these systems however has limitations. Presently it is not possible to combine and format pictures, text and hyperlinks into a MMS or picture message. Similarly web pages can only be read by using the on board browser of a mobile telephone. They cannot be created, edited or forwarded to another telephone (though, it is possible to send a bookmark or a hyperlink to a page).

US-A1-2006/0195506 discloses a mobile-to-mobile rich content messaging scheme in accordance with the pre-characterizing portion of claim 1. GB-A-2348082 discloses a method for handling messages including a graphical content on a mobile phone.

According to the present invention there is provided a method of forming messages as defined in appended claims 1 to 10.

Thus the present invention provides a set of commands which allow a mobile telephone to display images and hypertext links, as well as text, on the display screen.

The feature that the command set includes a command indicating that the destination mobile telephone should request some processing be carried by the message server on a defined dataset before sending the processed dataset to the destination mobile telephone allows for operations to be executed efficiently on the server which would form too heavy a processing burden for the destination mobile telephone and/or that only the processed dataset is transferred to the destination mobile telephone. The routine could be to perform a calculation on some data, a format change, or a resize or resolution change - e.g. of an image or document.

Further the command denoting areas of the display screen as cells of a table which contain the message content, and indicating the proportion, e.g. percentage, of the display screen that each cell is to occupy, allows a message display to be structured to show different content in the correct relative position and size on a variety of size of display screens.

The destination mobile telephone may interpret the command and perform some preliminary processing on the basis of the command and dataset, and then request that processing of the dataset be carried out on the server.

One example of such a command is the command indicating the proportion, e.g. percentage, of the display screen of the destination mobile telephone to be occupied by an image, or other visual element or object, in said message data. This allows correct display on a variety of destination mobile telephones having different screen sizes. Preferably the method further comprises transmitting to the message server from the destination mobile telephone the required size (eg in pixels) of the image or element that gives the correct proportional occupancy of the display screen of the destination mobile telephone, the message server resizing images or elements in the message to the required size, and then sending them to the destination mobile telephone. The command in this example specifies the image rescaling routine to be used, the image to be resized and the required ultimate image size. This means that the transfer of data between the message server and the mobile telephone is efficient because only the necessary data (the resized image) is sent from the server to the telephone.

The proportion of the display screen to be occupied by the image, table, row or cell thereof, can be expressed in the command in any convenient way, for example as a percentage, fraction or number. The same principle can be applied to format other visual elements or objects in the message, and is thus not limited to images and tables.

The command set may include a command denoting message data representing a hypertext link as a soft key link to be accessed by operation of a soft key on the mobile telephone. Thus rather than a user needing to scroll to and select a hypertext link displayed within a message, easy access to the link is available through the soft keys on the mobile telephone. (soft keys are keys on the mobile telephone whose function varies according to the operation state of the mobile telephone and whose function is indicated by the symbols or icons on the display screen, usually positioned close to the soft keys).

Preferably in response to the command denoting hypertext links as soft key links, the destination mobile telephone forms the hypertext links in said message data into a displayable list of hypertext links. Thus operation of the soft key on the destination mobile telephone replaces the message display with display of the list of hypertext links. The user can easily access the links in the list.

The command set may also include commands denoting the colour of background, colour of font and font style of the display on the destination mobile telephone.

Preferably the method of forming the message allows single or multiple recipients for the message to be defined.

The method may be executable on a mobile telephone or on a personal computer.

Another aspect of the invention provides a message editor for forming messages in accordance with the method above and a mobile telephone and personal computer programmed with such a message editor.

Another aspect of the invention provides a method of displaying messages formed as above on a destination mobile telephone. In accordance with this display method, certain actions are performed at a message server (such as to re-size images before supply to the destination) and certain of the commands are interpreted at the mobile telephone to control the display (such as the desired resizing, colours, font style, and whether the data is image or text). The display method preferably includes the step, before receipt of the message data, of transmitting to the message server the size of the image to be downloaded before it is downloaded. This size is preferably calculated at the destination mobile telephone using a percentage indicating command or commands in the message and its own screen size (in pixels). The server then resizes the image to the calculated size and transmits it to the destination mobile telephone.

Other aspects of the invention provide an executable software application for performing the display method, and a mobile telephone programmed with such an application.

The methods above are suitable for use within a community of mobile telephone users, for example, a community which has been formed by peer-to-peer invitation and which uses a data communications network service for exchange of messages, rather than the standard mobile telephony service. Thus the messages may be transmitted by means of data calls from the mobile telephones these being cheaper than standard telephone calls.

The invention will be further described by way of example with reference to the accompanying drawings in which:-
Figure 1 is a schematic overview of a messaging system within which the invention can be used;
Figure 2 is a screen shot of a mobile telephone receiving a message containing pictures and text;
Figure 3 is a screen shot of a mobile telephone receiving a message containing text and hyperlinks;
Figures 4A and B illustrate a message containing hyperlinks and a corresponding list of hyperlinks accessible by operation of a soft key on the mobile telephone;
Figure 5 shows more clearly the screenshot being displayed in Figure 2;
Figure 6 is an example of a message containing text, image and hyperlinks;
Figure 7 is a schematic diagram of a mobile telephone carrying software for executing an embodiment of the invention; and
Figure 8 is a schematic diagram of a message server usable in an embodiment of the invention.

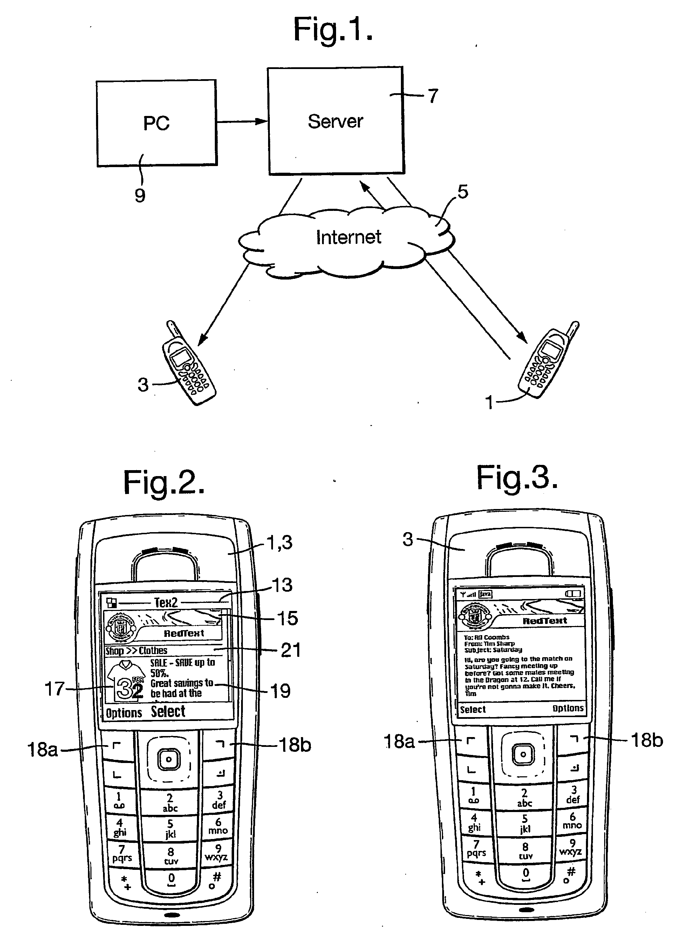

Figure 1 illustrates schematically a messaging system utilising mobile telephones 1 and 3 which communicate with each other using existing telephone networks and also using data calls via the internet 5 and a message server 7. While conventional telephone networks allow text messaging (SMS) and picture messaging (MMS) it is not always efficient to exchange multimedia content this way in terms of the amount of data to be transferred Therefore the messaging system of the present invention advantageously operates in a community of users who can also communicate via data calls using connections to the internet 5. A particular way of building up a community of users is described in copending patent application number PCT/GB07/000466. In that system existing users in the community can invite new users to join, the new users being identified by their telephone number. The message server 7 sends the invitee an SMS text message inviting them to join and if the invitation is accepted, the invitee is given (or chooses) a user name and an inbox at the message server 7. Text-based messages can then be exchanged using data calls via the inboxes held on the message server 7.

Although the present invention will be illustrated as being used in such a peer-to-peer developed community it will be appreciated that it is not restricted by the way in which the user community is developed. Consequently it is usable between other types of user, e.g. in other types of user community.

Figure 1 also illustrates that the system includes one or more personal computers 9 which may be used alternatively by users for example in the creation of messages, or by administrators of the messaging system.

In more detail, this embodiment of the invention provides a messaging system for allowing multimedia messages, containing links to other web-like pages, links to other multimedia messages, images and text, to be created on a mobile telephone 1 or personal computer 9 and sent via the internet 5 and a message server 7 to another node or nodes on the system, such as a destination mobile telephone 3. Each of the mobile telephones 1 and 3 is provided with an editor application allowing a user to combine pictures, hyperlinks and text into a message in a format defined by the user, and to send those messages to another node or nodes. Figure 2 is an illustration of such a message which includes images 15 and 17, text 19 and a hyperlink 21.

In this embodiment of the invention the elements of the message, which is displayed as a page, are formatted and organised according to a grid or table structure, placing each piece of content in a cell within a column and row in that table. This is similar to the structure commonly used in hyper text mark-up language (HTML) pages displayed by an internet browser. However, in accordance with the invention such pages can be sent as messages from one user node to another.

Regular users of the internet will recognise the problem that web pages often display quite differently and unexpectedly on different devices. The problem is even worse when a page is attempted to be displayed on a very small display screen, such as commonly found on a mobile telephone or other mobile terminal. In accordance with the present invention, to allow efficient display of a message formatted as a page within the confines of the display screen of a mobile device, a meta-language is used which comprises a set of commands to be included with the message data and which will be understood and interpreted by other nodes in the messaging system in order to achieve consistent and stable control of the display of the message on the destination of the mobile terminal. Commands of the command set in the meta-language are given in Table 1 below. (It should be noted that the system uses the standard html commands in addition to those below.)

**Table 1 - Multimedia messaging system command set**

| **Multimedia messaging system command set** | | | |
|---|---|---|---|
| **Command** | **Description** | **Modifiers** | **Comments** |
| <msg>...</msg> | denotes beginning and end of a message or page | link="(hex)" defines colour of text used for hyperlinks by that defined in hex RGB bgcolor = "(hex)" defines color of background for this messgae | |
| <table>... </table> | denotes beginning and end of a table within the message | w="(no of pixels)" or w="(xx%)" defines the width of the table as a number of pixels or as a perscentage of the actual width of the receiving screen | Tables can be newted within one another |
| <td>...</td> | denotes the beginning and end of the contents of a table cell. | w='(no of pixels)' or w='(xx%)' defines the width of the cell as a number of pixels or as a percentage of the width of the table bgcolor = '(hex)' defines color of background for this cell align="(Centre or left or right)" defines the alignment of the content within the cell | only used in tables |
| <tr>...</tr> | denotes the beginning and end of a row in a table | | only used in tables. Rows can be nested In cells |
| <p>...</p> | denotes the beginning and end of a paragraph of text | fgcolor ='(hex)' defines color of the text in this paragraph align="(Centre or left or right)" defines the alignment of the content within the paragraph | |
| <img>..</img> | instructs to put an image here, of the file type indicated by the extension of the file path | src="(file path - either local or internet)" defines the location of an image src="(file path to image scaling routine)?file=(name of image file to be scaled)", is combiled with w="(x%)" to instruct server to produce and download image scaled to X% of receiving device's screen and send it to the receiving device. | image scaler and file must be on same domain |
| | | src="(file path to image scaling routine)?file=(name of image file to be scaled)", is combiled with w="(y)" to instruct server to produce and download image scaled to y pixels. | |
| <a> ...</a> | denotes that the text contained within is a hyperlinks | href="(file path)" species the destination of this link | |
| <sk> ... </sk> | denotes that the text contained within is a soft key link | href="(file path)" species the destination of this link | |
| <form>... </form> | denotes the beginning and end of a form | name="(variable)" defines the name of the form action="(file path)" defines the action to take on completion of the form method="(eg post)" defines what to do once and data has been entered in the form | |
| <select>...</select> | denoted that the options denoted within are to be selected from and | name="(variable)" defines the variable where the result of the selection is placed | |
| <option>... </option> | makes a list of options which can be selected from | value="(identifier)" defines the variable that is returned if this option is selected | |
| <input.../> or <input>...</input> | denotes the beginning and end of an area where variables can be input | type="(eg text)" says what kind of input to expect, eg text or numeric name="variable name)" defines the variable into which the input is put size="(no pf pixels)" denotes the width of the input area | |
| <?php ..... ?> | defines a section of PHP script that Will be execued by the server before sending msg. | | |

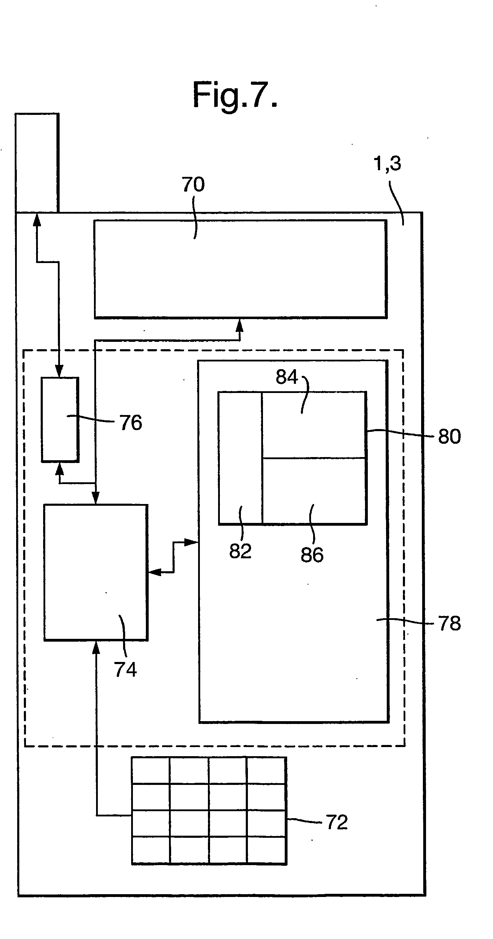

As can be seen, the command set includes labels or tags which in general denote the beginning and end of data, often text, which is to be interpreted in a particular way, for example, tags denoting the beginning and end of a message, the beginning and end of a table, a table cell and a table row in the message, text and the insertion point of an image, hyperlinks and soft key links, forms, options for selection and areas where variables can be input by the user of the destination mobile telephone, and a section of PHP script (or another scripting language) that will be executed by the server 7. This command set is utilised when a message is formed by a user of the messaging system so that the message data will be displayed on the destination mobile telephone in the desired manner. Thus as shown schematically in Figure 7 the mobile telephones 1 and 3 which are using the messaging system include, as is conventional, a display 70, keyboard 72, a processor 74 and a communication interface 76 and storage 78 in the form of built-in memory and removable memory card. Various software applications are stored in the storage 78, and in accordance with the invention one of these applications 80 is a messaging application executable by the processor 74 to allow the user to engage in the messaging system of the invention. The executable software application 80 includes the command set 82, an editor application 84 for allowing the creation of messages and a display application 86 to allow received messages to be displayed in the manner defined by the commands.

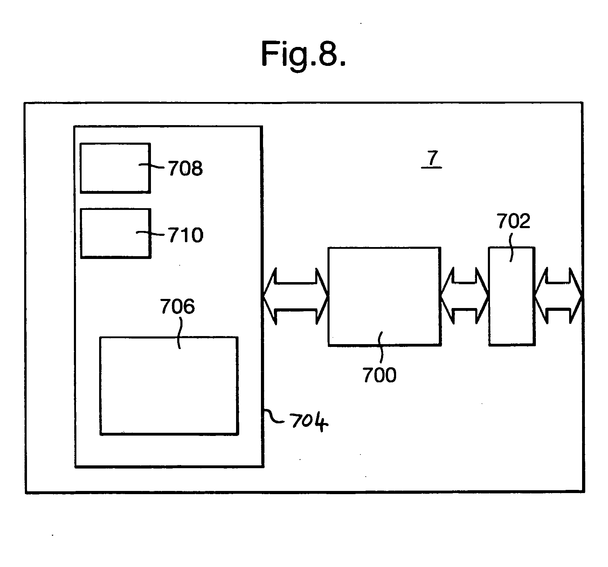

As explained above the messaging system in this embodiment is based on the messages being exchanged via the internet using data calls to a server 7. As schematically illustrated in Figure 8 the server 7 includes a processor 700, communications interface 702 and storage 704. To run the messaging system the server runs a messaging system server software application 706 and stores user's inboxes 708 and also, optionally, a space 710 for users to create web-like pages viewable by other users of the system.

A typical operation of the messaging system of this embodiment of the invention will now be explained.

Firstly, a user wanting to create and send a message will activate the editor application 84 on their mobile telephone 1 (or this application can be run on a personal computer 9) by starting the messaging system application 80 and selecting an operation to "create new message".

The user sets the desired visual attributes of the message, such as the background colour, text colour and font, decides on the general format of the message and what content is to be included, includes that content and then sends the message.

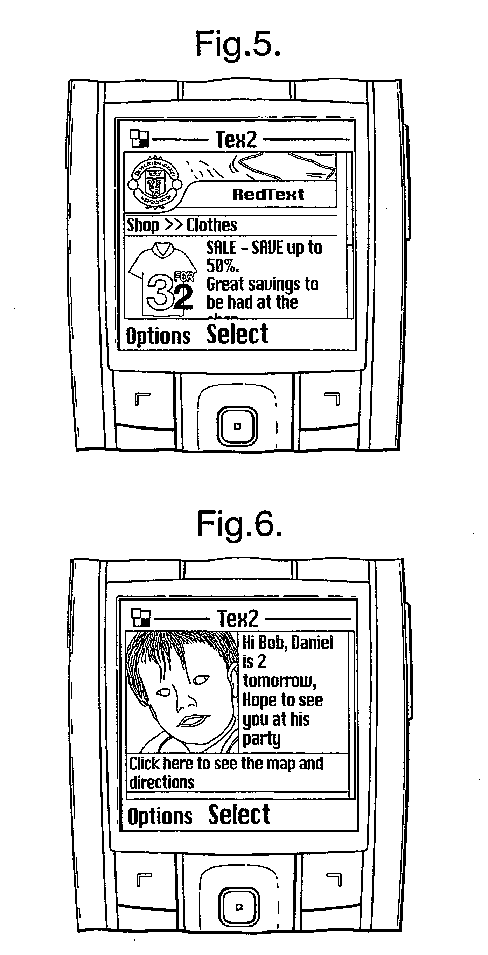

For example, to create the message shown in Figure 6 the user would follow the following steps:-
1) Start up the program 80
2) Select "create new message" with a white background and red link text
3) Select "add table" with width 100%
4) Select "add picture" with width of 55% of the table
5) Browse files in local store of mobile phone and select the picture of his son
6) Select "add text" with a blue colour and occupying the remainder of the width of this table.
7) Select "end of table"
8) Select "add table" with width 100% and background colour of blue
9) Select "add hyperlink" and enter text
10) Select "end of table"
11) Select "add soft key links" and add destinations and text for two links to the directions and the present list.
12) Preview the message to check that the format, colours and content are as desired by the user
13) Select "send message"
14) Select names of addressee(s) and send.

The editor application 84 then creates the message as set out in Table 2 below, which is sent to the server 7 with the destination. Thus the message is translated into a combination of the meta-language format (commands of the command sets) described above, and component files containing pictures and other content for transmission. As will be appreciated from the steps explained above, the editor application allows the user to import pictures from, for example, the mobile telephone's own camera, or other images available, and place them in a formatted message alongside other pictures, files, text and hyperlinks. The picture is normally sent to the server by the sending node in the resolution in which it is held on the sending device. This is usually a greater resolution than it will be displayed, either in the preview or on the destination phone. By using the tabular format and the commands indicating the percentage of the display screen to be occupied by the content, the user can control how the message will be displayed at the destination, regardless of the screen size at the destination. The messaging system application 706 on the server 7 then places message in the inbox 708 of the recipient(s), and sends an alert to each of the recipient(s) mobile terminals 3 to warn of a message waiting.

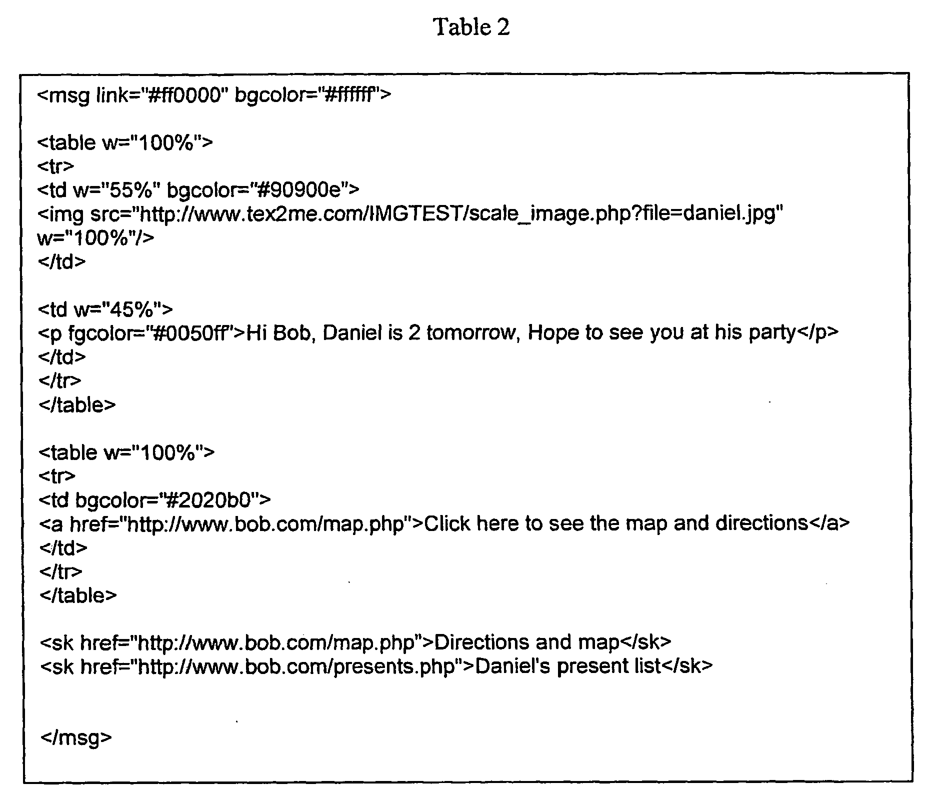

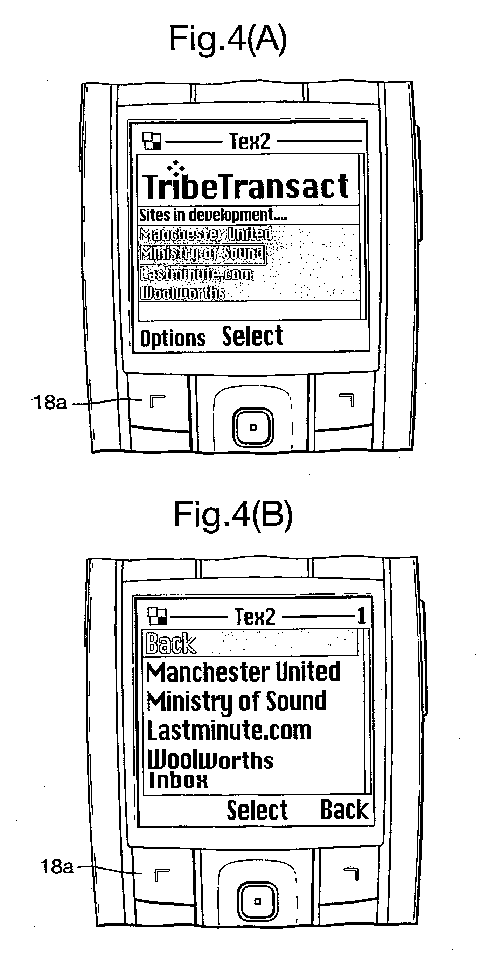

The user of the destination mobile telephone 3 will, when they want to read the message, start the messaging application 80 on their mobile telephone and, utilising the display application 86, select the option to view the contents of their inbox, and then select the particular message in the inbox. In response the following steps are executed:-
1. The receiving terminal 3 makes a request to the message server 7 to be sent the contents of the message.
2. The message server 7 sends the message (after executing any server script code in the header), to the receiving terminal 3.
3. The receiving terminal 3 executes line-by-line the code forming the message. In formatting the display it applies the percentage indicating commands representing the size of the cells of the table to its screen size in pixels, and displays the message content in the cells.
4. In this example, when the receiving terminal 3 comes to the image display command delimited by the tags <img>...<img>, the display application 86 on the mobile telephone reacts to the special format of the data within the source destination of the message (src=""). In this case the source destination points to the image scaling daemon "scale_image.php" on the server in the directory www.tex2me.com/IMGTEST. The receiving terminal then requests that the file defined in the statement file="daniel.jpg" (in this case located in the default image directory - otherwise a source to the image would have been provided eg file="www.image.com/myimage.gif") is resized by the server before the image file it is sent to the mobile telephone 3. This is achieved as follows:-
   (a) Firstly the display application calculates what size in pixels the image should be based on the image percentage command w="(x%)" within the image display tags, and the table cell percentage command <td w="(y)", and the table width percentage command <table w="(z)". That is to say the image size in pixels will be xyz%*width of the display in pixels. In the example of Table 2 above the image daniel.jpg would be 100%x55%x100% = 55% of the screen width.
   (b) The display application 86 then transmits to the message server 7 a request that the image denoted by the source reference in the image ="(y)", command (eg daniel.jpg in the example above) is resized using the scale image processing daemon scale_image.php on the server 7 to be that number of pixels wide.
   (c) The server application then runs the scale image processing daemon scale_image.php to resize the designated source image, and sends the image to the mobile telephone 3, which then displays it.

Thus each image is resized by the server 7 before sending it to the receiving terminal 3. In this example, the image known as daniel.jpg is resized by the server 7 to 55% of the screen width of the receiving mobile telephone (note: it is possible to alter the aspect ratio of the picture by specifying a height also). This resizing is carried out on the message server 7.

By this method, the intended screen formatting is preserved no matter what size the screen is on the receiving display 70. Also the amount of data transferred across the wireless network is thereby at its most efficient, requiring minimal transmission time and of minimum cost to transmit

The user can scroll up and down through the content of the message using the mobile terminal's keypad 72 and can activate hyper links contained within the content by clicking on the link text or by accessing it via the soft key links.

It is also possible to forward such a message to another node or nodes on the community via the message server 7. The receiver 3 can similarly view, navigate and select the links on the page.

In the messaging system above, of particular note is the ability to denote a hyperlink contained within the message as a soft key link using the <sk>...</sk> command. As indicated in Table 1, within these start and ending tags the label href="(filepath)" specifies the destination of the link. This soft key command is interpreted by the display application 86 on the destination mobile telephone 3 and causes it to place a link to the specified destination page within a list of links which is displayed by activating one of the soft keys 18a, 18b on the mobile telephone 1, 3. Thus, for example, the command shown in Table 3 causes the receiving terminal to place a link to a particular shopping page held at the web server tex2me.com in the displayable list of links.

**Table 3 - An example of the code that would cause the receiving terminal to include a soft key link**

| |
|---|
| <sk href="http://www.tex2me.com/shopping/manu.php">Manchester United</sk>. |

Figure 4(A) illustrates a screen shot of a message including four hyperlinks as well as other material, and operation of the soft key 18a, functioning in the illustrated state as an "options" key, causes the display application 86 to display a list of options, one of which is to access the list of soft key links. The list is displayed as shown in Figure 4(B). Thus in Figures 4A and B the set of ordinary hyperlinks (defined by the <ahref="... "> command are mirrored by soft key links (defined by the <sk> command). The code to form the message illustrated in Figures 4(A) and (B) is shown in Table 4 below.

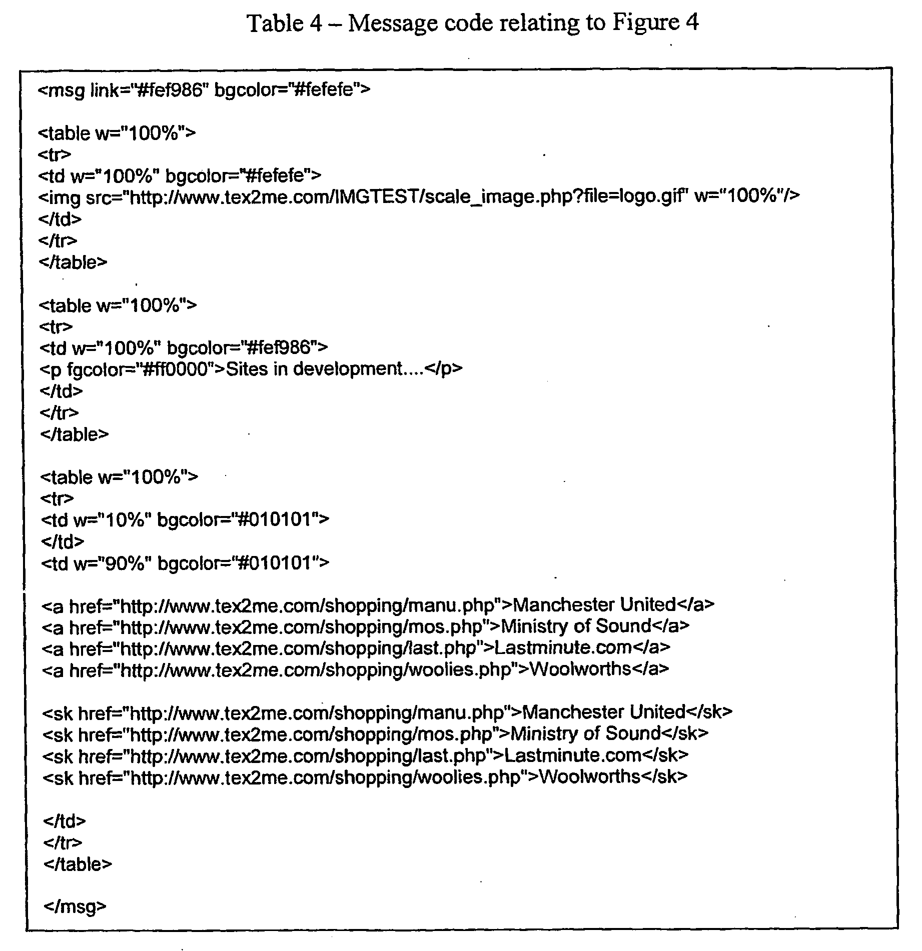

Such a list is more clearly visible to the user than links embedded in a message, and also it is easy for a user to scroll up and down the list and select individual items than it is for the user to scroll through a detailed, multimedia message. This may be appreciated by considering the example illustrated in Figure 3 where the message includes more text and images together with a link (in this case the word "dragon"). Again, operation of the soft key 18b gives a list of options, one of which is to display a list of hyperlinks, one of the hyperlinks being a link to the "dragon" page.

As mentioned above the pictures, text and hyperlink that make up a message are displayed by the receiving terminal 3, according to its screen size, using a table system to frame each piece of content. Thus, for example, the part of the message shown in the screen shot of Figure 5 is formed by the code below in Table 5.

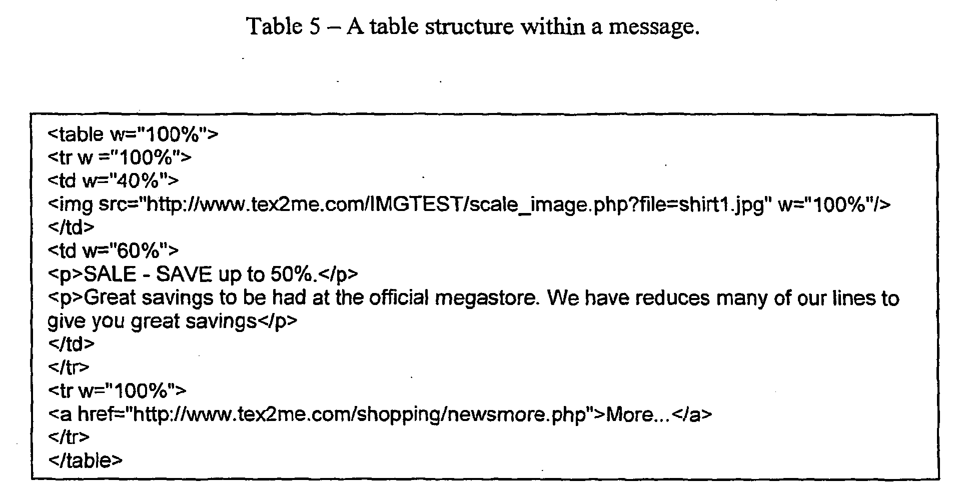

It can be seen that the overall width of the table is set at 100% of the display screen size, while the image "shirt 1.jpg" is included in a cell of 40% of the width of the screen and the text is in an adjacent cell which is 60% of the width of the screen.

It will be appreciated from the above explanation that certain actions are performed by the server 7 before the relevant content is sent to the destination mobile telephone 3 (such as the image scaling), and the server 7 may, as is conventional act upon PHP script in the header of the message, while other commands are interpreted at the destination mobile telephone 3, such as calculating the image size based on the percentage and the screen size (which converts the percentages specified by the creator of the message into actual image sizes, for example, in the form of numbers of pixels), whether content is text or image, the font and colour of the text and so on.

This embodiment of the invention also allows a user to create static content in the form of a web-like page which can be stored in a user's area 710 on the server 7. This area on the server is assigned a URL and it can be viewed on demand by any user of the system. This allows them to create a web-like space containing any kind of desired file standards, pictures, text and links to further content. These pages are defined by using the same command set explained above, and so can be viewed by any other user of the messaging system. Users can thus create a web space, message board or blog-type content.

## Claims

1. A method of forming messages comprising message data for display on a destination mobile telephone (1,3) having a display screen (70), the method comprising: providing a set of commands for inclusion in the message and operable to control the display of the message data on the display screen (70) of the destination mobile telephone (1,3), said set of commands comprising a text command for denoting message data to be displayed as text, an image command for denoting message data to be displayed as an image and a link command for denoting message data as a hypertext link; and forming a message including message data and at least one of said commands of the command set;
**characterized in that**:
the command set includes a command indicating that the destination mobile telephone (1,3) should request that processing be carried out by a message server (7) on a pre-defined dataset before sending the processed dataset to the destination mobile telephone (1,3), said command including the name of the routine to perform the processing and specifying the dataset to be processed, and wherein the command set includes a command denoting areas of the display screen (70) as cells of a table, and indicating the proportion of the display screen (70) that the table and each cell is to occupy.

2. A method according to claim 1 wherein said messages are supplied from a sender to the message server (7), and wherein the method further comprises calculating at the destination mobile telephone (1,3) the size of images to be displayed by using the proportion indicating command and the display size of the destination mobile telephone (1,3), transmitting to the message server (7) from the destination mobile telephone (1,3) the calculated image size, and wherein the message server (7) scales images in the message to make them the calculated size, and then sends the scaled images to the destination mobile telephone (1,3).

3. A method according to claim 1 or 2 wherein the destination mobile telephone (1,3) formats the display such that the message data is displayed in a table and in cells thereof occupying the proportion of the display screen (70) indicated by the cell fraction indicating command.

4. A method according to any one of the preceding claims wherein the command set includes a command denoting message data representing a hypertext link as a softkey link to be accessed by operation of a softkey on the mobile telephone (1,3).

5. A method according to claim 4 wherein in response to said command denoting message data representing a hypertext link as a softkey link the destination mobile telephone (1,3) forms hypertext links in said message data into a list of hypertext links displayable on operation of a softkey on the destination mobile telephone (1,3).

6. A method according to any one of the preceding claims wherein the command set includes a command denoting message data as representing the colour of what is to be displayed.

7. A method according to any one of the preceding claims wherein the command set includes a command denoting message data as representing the font style of text to be displayed.

8. A method according to any one of the preceding claims wherein the method comprises the step of defining multiple recipients for a formed message.

9. A method according to any one of the preceding claims wherein the method is executable on a mobile telephone (1,3) or on a personal computer (9) connected to a communications network (5).

10. A method of displaying message data on a mobile telephone (1,3) having a display screen, comprising receiving a message formed in accordance with the method of any one of claims 1 to 9 and interpreting the commands in the message and controlling the display of the message data on the display screen (70) in accordance with the interpreted commands.

11. A method according to claim 10 wherein the mobile telephone (1,3) receives the message data from a message server (7), the method comprising the step, before receipt of an image in the message data, of calculating the required image size based on the display screen size of the destination mobile telephone (1,3) and a proportion indicating command in the message, and sending to the message server (7) a request for the image to be resized.

12. A method according to claim 10 or 11 further comprising in response to a command in the message forming at the destination mobile telephone (1,3) a list of hypertext links included in said message and displaying them on operation of a softkey on the destination mobile telephone (1,3).

13. A method according to any one of claims 1 to 12 wherein said destination mobile telephone (1,3) is one of a community of mobile telephone users formed by peer-to-peer invitation.

14. A method according to any one of claims 1 to 13 further comprising the transfer of messages between nodes of a telecommunications network, at least one of said nodes being a mobile telephone (1,3), wherein said messages are carried on a data communications network service (5) different from said telecommunications network.

15. A mobile telephone (1,3) or a personal computer (9) programmed to execute the method of any one of the preceding claims.

## Patentansprüche

1. Verfahren zum Bilden von Nachrichten, die Nachrichtendaten zum Anzeigen auf einem Ziel-Mobiltelefon (1, 3) aufweisen, das einen Anzeige-Bildschirm (70) hat, wobei das Verfahren aufweist: Bereitstellen eines Satzes von Befehlen zum Einschließen in der Nachricht und ausgestaltet, die Anzeige der Nachrichtendaten auf dem Anzeige-Bildschirm (70) des Ziel-Mobiltelefons (1, 3) zu steuern, wobei der Satz von Befehlen einen Textbefehl zum Bezeichnen von Nachrichtendaten als anzuzeigenden Text, einen Bildbefehl zum Bezeichnen von Nachrichtendaten als anzuzeigendes Bild und einen Linkbefehl zum Bezeichnen von Nachrichtendaten als einen Hypertext-Link aufweist; und Bilden einer Nachricht einschließlich Nachrichtendaten und zumindest einem der Befehle des Befehlssatzes;
**dadurch gekennzeichnet, dass**
der Befehlssatz einen Befehl einschließt, der aussagt, dass das Ziel-Mobiltelefon (1, 3) anfordern soll, dass eine Verarbeitung auszuführen ist durch einen Nachrichtenserver (7) auf einem vordefinierten Datensatz, bevor der verarbeitete Datensatz zu dem Ziel-Mobiltelefon (1, 3) gesendet wird, wobei der Befehl den Namen der Routine einschließt, die die Verarbeitung und die Spezifizierung des zu verarbeitenden Datensatzes durchführt, und wobei der Befehlssatz einen Befehl einschließt, der Bereiche des Anzeige-Bildschirms (70) als Zellen einer Tabelle bezeichnet und das Verhältnis des Anzeige-Bildschirms (70) angibt, das die Tabelle und jede Zelle belegen sollen.

2. Verfahren nach Anspruch 1, wobei die Nachrichten von einem Absender dem Nachrichtenserver (7) zur Verfügung gestellt werden und wobei das Verfahren außerdem bei dem Ziel-Mobiltelefon (1, 3) ein Berechnen der Größen von darzustellenden Bildern aufweist, unter Verwendung des Befehls zum Angeben des Verhältnisses und der Anzeigegröße des Ziel-Mobiltelefons (1, 3), wobei von dem Ziel-Mobiltelefon (1, 3) die berechnete Anzeigegröße zu dem Nachrichtenserver (7) übertragen wird und wobei der Nachrichtenserver (7) Bilder in der Nachricht skaliert, um sie zu der berechneten Größe zu machen, und dann die skalierten Bilder zu dem Ziel-Mobiltelefon (1, 3) sendet.

3. Verfahren nach Anspruch 1 oder 2, wobei das Ziel-Mobiltelefon (1, 3) die Anzeige formatiert, so dass die Nachrichtendaten in einer Tabelle und in Zellen davon angezeigt werden, wobei sie das Verhältnis des Anzeige-Bildschirms (70) belegen, das durch den Befehl zum Angeben des Zellenbruchteils angegeben wird.

4. Verfahren nach einem der vorhergehenden Ansprüche, wobei der Befehlssatz einen Befehl einschließt, der Nachrichtendaten bezeichnet, die einen Hypertext-Link als einen Softkey-Link repräsentieren, der durch Betätigung eines Softkey an dem Mobiltelefon (1, 3) zugänglich ist.

5. Verfahren nach Anspruch 4, wobei in Reaktion auf den Befehl, der Nachrichtendaten bezeichnet, die einen Hypertext-Link als einen Softkey-Link repräsentieren, das Ziel-Mobiltelefon (1, 3) Hypertext-Links in den Nachrichtendaten in eine Liste von Hypertext-Links bildet, die auf Betätigung eines Softkey an dem Ziel-Mobiltelefon (1, 3) anzeigbar sind.

6. Verfahren nach einem der vorhergehenden Ansprüche, wobei der Befehlssatz einen Befehl zum Bezeichnen von Nachrichtendaten einschließt als Repräsentierung der Farbe dessen, was anzuzeigen ist.

7. Verfahren nach einem der vorhergehenden Ansprüche, wobei der Befehlssatz einen Befehl zum Bezeichnen von Nachrichtendaten einschließt als Repräsentierung des Font-Stils von anzeigendem Text.

8. Verfahren nach einem der vorhergehenden Ansprüche, wobei das Verfahren den Schritt aufweist, bei dem mehrere Empfänger für eine gebildete Nachricht definiert werden.

9. Verfahren nach einem der vorhergehenden Ansprüche, wobei das Verfahren auf einem Mobiltelefon (1, 3) oder auf einem PC (9) ausführbar ist, der mit einem Kommunikationsnetz (5) verbunden ist.

10. Verfahren zum Anzeigen von Nachrichtendaten auf einem Mobiltelefon (1, 3), das einen Anzeige-Bildschirm hat, aufweisend: Empfangen einer Nachricht, die entsprechend dem Verfahren nach einem der Ansprüche 1 bis 9 gebildet ist, und Interpretieren der Befehle in der Nachricht und Steuern der Anzeige der Nachrichtendaten auf dem Anzeige-Bildschirm (70) entsprechend der interpretierten Befehle.

11. Verfahren nach Anspruch 10, wobei das Mobiltelefon (1, 3) die Nachrichtendaten von einem Nachrichtenserver (7) empfängt, wobei das Verfahren den Schritt aufweist, vor Empfangen eines Bildes in den Nachrichtendaten die erforderliche Bildgröße basierend auf der Anzeige-Bildschirmgröße des Ziel-Mobiltelefons (1, 3) und einem Befehl in der Nachricht zum Angeben eines Verhältnisses zu berechnen und eine Anforderung zum Ändern der Größe des Bildes zu dem Nachrichtenserver (7) zu senden.

12. Verfahren nach Anspruch 10 oder 11, weiterhin aufweisend: in Reaktion auf einen Befehl in der Nachricht wird bei dem Ziel-Mobiltelefon (1, 3) eine Liste von Hypertext-Links, die in der Nachricht enthalten sind, gebildet und sie werden auf Betätigung eines Softkey an dem Ziel-Mobiltelefon (1, 3) angezeigt.

13. Verfahren nach einem der Ansprüche 1 bis 12, wobei das Ziel-Mobiltelefon (1, 3) eines einer Gemeinschaft von Mobiltelefon-Benutzern ist, die durch Peer-zu-Peer Einladung gebildet ist.

14. Verfahren nach einem der Ansprüche 1 bis 13, weiterhin aufweisend:
Übertragung von Nachrichten zwischen Knoten eines Telekommunikationsnetzes, wobei zumindest einer der Knoten ein Mobiltelefon (1, 3) ist, wobei die Nachrichten von einem Daten-Kommunikationsnetz-Service (5) geleitet werden, der sich von dem Telekommunikationsnetz unterscheidet.

15. Mobiltelefon (1, 3) oder PC (9), programmiert, das Verfahren nach einem der vorhergehenden Ansprüche auszuführen.

## Revendications

1. Procédé de formation de messages comprenant des données de message destinées à être affichées sur un téléphone portable destinataire (1, 3) comportant un écran d'affichage (70), le procédé comprenant :
la fourniture d'un jeu de commandes destinées à être incluses dans le message et pouvant être actionnées pour commander l'affichage des données de message sur l'écran d'affichage (70) du téléphone portable destinataire (1, 3) ledit jeu de commandes comprenant une commande textuelle pour mentionner les données de message à afficher sous forme de texte, une commande d'image pour mentionner les données de message à afficher sous forme d'image et une commande de lien pour mentionner les données de message sous forme de lien hypertexte ; et
la formation d'un message incluant des données de message et au moins l'une desdites commandes du jeu de commandes ;
**caractérisé en ce que** :
le jeu de commandes comporte une commande indiquant que le téléphone portable destinataire (1, 3) doit demander que le traitement soit exécuté par un serveur de messages (7) sur un jeu de données prédéfini avant d'envoyer le jeu de données traitées au téléphone portable destinataire (1, 3), ladite commande incluant le nom du sous-programme destiné à exécuter le traitement et spécifiant le jeu de données à traiter et dans lequel le jeu de commandes comporte une commande mentionnant des zones de l'écran d'affichage (70) sous forme de cellules d'un tableau et indiquant la proportion de l'écran d'affichage (70) que doivent occuper le tableau et chaque cellule.

2. Procédé selon la revendication 1, dans lequel lesdits messages sont délivrés par un expéditeur au serveur de messages (7), et dans lequel le procédé comprend en outre le calcul dans le téléphone portable destinataire (1, 3) de la taille des images à afficher en utilisant la commande d'indication de proportion et la taille d'affichage du téléphone portable destinataire (1,3), la transmission au serveur de messages (7) depuis le téléphone portable destinataire (1, 3) de la taille d'image calculée et dans lequel le serveur de messages (7) modifie l'échelle des images situées dans le message pour les amener à la taille calculée et envoie ensuite les images redimensionnées au téléphone portable destinataire (1, 3).

3. Procédé selon la revendication 1 ou 2, dans lequel le téléphone portable destinataire (1, 3) formate l'affichage de façon à afficher les données de message dans un tableau et dans des cellules de celui-ci occupant la proportion de l'écran d'affichage (70) indiquée par la commande d'indication de fraction de cellule.

4. Procédé selon l'une quelconque des revendications précédentes, dans lequel le jeu de commandes comporte une commande mentionnant les données de message représentant un lien hypertexte sous forme d'un lien de touche programmable auquel on accède en actionnant une touche programmable sur le téléphone portable (1, 3).

5. Procédé selon la revendication 4, dans lequel en réponse à ladite commande mentionnant les données de message représentant un lien hypertexte sous forme d'un lien de touche programmable, le téléphone portable destinataire (1, 3) forme des liens hypertextes dans lesdites données de message dans une liste de liens hypertextes pouvant être affichée en actionnant une touche programmable sur le téléphone portable destinataire (1, 3).

6. Procédé selon l'une quelconque des revendications précédentes, dans lequel le jeu de commandes comporte une commande mentionnant les données de message, représentant la couleur de ce qui doit être affiché.

7. Procédé selon l'une quelconque des revendications précédentes, dans lequel le jeu de commandes comporte une commande mentionnant les données de message, représentant le type de police du texte à afficher.

8. Procédé selon l'une quelconque des revendications précédentes, dans lequel le procédé comprend l'étape consistant à définir plusieurs destinataires pour un message formé.

9. Procédé selon l'une quelconque des revendications précédentes, dans lequel le procédé peut être exécuté sur un téléphone portable (1, 3) ou sur un ordinateur personnel (9) connecté à un réseau de communication (5).

10. Procédé d'affichage de données de message sur un téléphone portable (1, 3) comportant un écran d'affichage, comprenant la réception d'un message formé conformément au procédé selon l'une quelconque des revendications 1 à 9 et l'interprétation des commandes situées dans le message et la commande de l'affichage des données de message sur l'écran d'affichage (70) conformément aux commandes interprétées.

11. Procédé selon la revendication 10, dans lequel le téléphone portable (1,3) reçoit les données de message depuis un serveur de messages (7), le procédé comprenant l'étape, avant la réception d'une image dans les données de message, de calcul de la taille d'image requise basée sur la taille de l'écran d'affichage du téléphone portable destinataire (1, 3) et une commande d'indication de proportion dans le message et l'envoi au serveur de messages (7) d'une requête de redimensionnement de l'image.

12. Procédé selon la revendication 10 ou 11, comprenant en outre, en réponse à une commande dans le message, la formation dans le téléphone portable destinataire (1, 3) d'une liste de liens hypertextes inclus dans ledit message et leur affichage lors de l'actionnement d'une touche programmable sur le téléphone portable destinataire (1, 3).

13. Procédé selon l'une quelconque des revendications 1 à 12, dans lequel ledit téléphone portable destinataire (1, 3) fait partie d'une communauté d'utilisateurs de téléphones portables formée par une invitation poste à poste.

14. Procédé selon l'une quelconque des revendications 1 à 13, comprenant en outre le transfert de messages entre les noeuds d'un réseau de télécommunication, au moins l'un desdits noeuds étant un téléphone portable (1, 3), dans lequel lesdits messages sont transportés sur un service de réseau de communication de données (5) différent dudit réseau de télécommunications.

15. Téléphone portable (1, 3) ou ordinateur personnel (9) programmé pour exécuter le procédé selon l'une quelconque des revendications précédentes.
